(19) Europäisches Patentamt / European Patent Office / Office européen des brevets

(11) **EP 3 819 121 A1**

(12) **EUROPEAN PATENT APPLICATION**

(43) Date of publication:
**12.05.2021 Bulletin 2021/19**

(21) Application number: **19207063.9**

(22) Date of filing: **05.11.2019**

(51) Int Cl.:
**B32B 27/08** (2006.01)　　**B32B 27/20** (2006.01)
**B32B 27/30** (2006.01)　　**B32B 27/36** (2006.01)
**B32B 27/38** (2006.01)　　**B29C 43/20** (2006.01)
**B29C 70/10** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Euro Advanced Carbon Fiber
Composites GmbH
73730 Esslingen Am Neckar (DE)**

(72) Inventor: **TAKEMOTO, Hidehiro
70173 Stuttgart (DE)**

(74) Representative: **Kador & Partner PartG mbB
Corneliusstraße 15
80469 München (DE)**

(54) **SANDWICH STRUCTURE PRECURSOR AND SANDWICH STRUCTURE COMPOSITE**

(57) The present invention relates to a sandwich structure precursor, a method for producing a sandwich structure composite from a structure sandwich precursor and an article comprising the sandwich structure composite.

**Figure 1**

**Description**

Technical field of the invention

The present invention relates to a sandwich structure precursor, a method for producing a sandwich structure composite from a structure sandwich precursor and an article comprising the sandwich structure composite.

Background Art of the Invention

Fiber-reinforced composite materials, particularly carbon-fiber-reinforced composite materials, which comprise carbon fibers and a matrix resin, have wide applications not only in the field of sporting goods such as golf clubs, tennis rackets and fishing rods, but also in the fields of structural materials for aircrafts or vehicles and of reinforcement of concrete structures, because of their superior mechanical properties. Also, in view of the light-weight strategy of automobile manufacturers and aircraft manufacturers aiming to reduce both fuel costs and carbon dioxide emissions using fiber-reinforced components and parts are increasingly used, having lower weight than conventional components and parts while still being able to offer adequate mechanical properties.

In recent years, carbon-fiber-reinforced composite materials have also been used for cases of electrical/electronic equipment such as note-type personal computers and video cameras, because of the electrical conductivity of carbon fibers and their superior electromagnetic shielding properties and mechanical properties, contributing to providing thinner-wall casings or lighter-weight equipment.

A rectifying plate for controlling the flow of air provided at the bottom of a vehicle to generate an aerodynamic downforce is disclosed in JP 2000302062. The rectifying plate comprises a plastic foam as a core material which is sandwiched between two surface layers made of fiber-reinforced plastic layers.

WO 2016/088871 relates to a sandwich component and a method for production therefore. The sandwich component comprises a honeycomb core having a plurality of webs and at least one cover layer. The honeycomb core is made of a cellulose-based material, in particular paper. These sandwich components can be used, as example, for load-bearing elements such as floor panels, seat components or a door leaf.

A sheet molding compound (SMC) is disclosed in JP 2016124102. The SMC comprises carbon fibers, a resin composition and milled pitch-based carbon fibers, the SMC being light weight and having an improved elastic modulus.

There is still the need, in particular in the automotive sector, for light-weight components and parts for automobiles having lower weight than conventional components and parts while at the same time being able to offer adequate or even improved mechanical properties, such as stiffness.

There is also the need that such light-weight components can be easily produced, preferably in a one-step process, so as to reduce costs and improve time efficiency.

Problems to be solved by the Invention

It is an object of the present invention to provide a composite which has improved mechanical properties, such as stiffness, and at the same time having lower weight.

It is a further object of the present invention to provide a fast and time efficient method for producing such a composite by using a precursor as raw material.

It is still an object of the present invention to provide an article comprising a composite, the article being used as a component or part, for example, of an automobile or an aircraft.

Means for solving the Problem

To achieve the above-defined objects, the invention provides a sandwich structure precursor comprising two surface layers (A, C) and a middle layer (B) arranged between the two surface layers (A, C), wherein
the surface layer (A) comprises a matrix resin and reinforcing fibers,
the middle layer (B) comprises a matrix resin,
the surface layer (C) comprises a matrix resin and reinforcing fibers,
wherein the density of the middle layer (B) is lower than the density of the surface layer (A) and the density of the middle layer (B) is lower than the density of the surface layer (C).

The invention further provides a method for producing a sandwich structure composite, the method comprising

a) providing a sandwich structure precursor according to the invention as described above in all embodiments, and

b) molding the sandwich structure precursor of step a).

The invention also provides a sandwich structure composite obtained by the method of the invention as described in all embodiments herein.

The invention further provides an article comprising the sandwich structure composite according to the invention as described in all embodiments herein.

The sandwich structure precursor according to the present invention and the sandwich structure composite according to the invention has several advantages. The sandwich structure precursor is a light weight material due to the middle layer (B) having a lower density than both the surface layer (A) and surface layer (C).

Furthermore, the sandwich structure precursor serves as raw material or precursor for the production of a sandwich structure composite. The sandwich structure as such provides improved mechanical stability, for instance high load bearing capacity or stiffness. Hence, the sandwich structure composite has a lower weight than conventional components used in the art while at the same time being able to offer adequate or even improved mechanical properties, such as stiffness.

The invention has the further advantage that the sandwich structure composite can be obtained by a one-step moulding process of the sandwich structure precursor. This makes the production process of the sandwich structure composite fast, cost-effective and suitable for mass production.

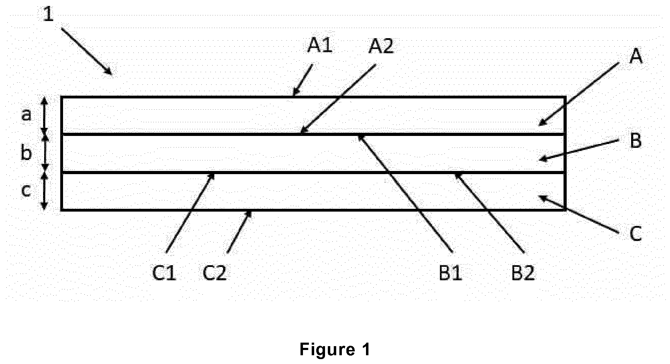

Each of the layers (A), (B) and (C) has two opposing surfaces, i.e. a first surface and a second surface. Accordingly, surface layer (A) has a first surface (A1) and a second surface (A2), middle layer (B) has a first surface (B1) and a second surface (B2), and the surface layer (C) has a first surface (C1) and a second surface (C2). This is also shown in Figure 1 below.

Due to the sandwich structure of the precursor, the middle layer (B) is arranged, or sandwiched, between the surface layer (A) and the surface layer (C). The first surface (B1) of the middle layer (B) thus faces the second surface (A2) of the surface layer (A), and the second surface (B2) of the middle layer (B) faces the first surface (C1) of the surface layer (C).

One or more further layer(s) may or may not be arranged between the first surface (B1) of the middle layer (B) and the second surface (A2) of the surface layer (A) and/or between the second surface (B2) of the middle layer (B) and the first surface (C1) of the surface layer (C). This one or more further layer(s) is/are preferably different, such as in composition, from the layers (A), (B) and (C).

It is, however, preferred that the first surface (B1) of the middle layer (B) is in direct contact with the second surface (A2) of the surface layer (A) and the second surface (B2) is in direct contact with the first surface (C1) of the surface layer (C). In other words, there is/are no further layer(s) positioned between the first surface (B1) of the middle layer (B) and the second surface (A2) of the surface layer (A) and/or between the second surface (B2) of the middle layer (B) and the first surface (C1) of the surface layer (C).

Preferably, one or more outer layer(s) are arranged adjacent the first surface (A1) of the surface layer (A) and/or adjacent the second surface (C2) of the surface layer (C). The one or more outer layer(s) can be lacquer layer(s), color layer(s) or the like. The outer layer(s) can thus serve to improve e.g. the UV resistance and/or the weather resistance of the first surface (A1) of the surface layer (A) and/or the second surface (C2) of the surface layer (C). Preferably, only one outer layer is arranged adjacent the first surface (A1) of the surface layer (A) and/or adjacent the second surface (C2) of the surface layer (C), more preferably only one outer layer is arranged either adjacent the first surface (A1) of the surface layer (A) or adjacent the second surface (C2) of the surface layer (C).

Preferably, the sandwich structure precursor consists of two surface layers (A, C) and a middle layer (B) arranged between the surface layer (A) and the surface layer (C).

The matrix resin of the surface layer (A) and/or the matrix resin of the middle layer (B) and/or the matrix resin of the surface layer (C) preferably comprises a thermosetting resin. The matrix resin or the thermosetting resin preferably comprises an epoxy resin, a vinyl ester resin or an unsaturated polyester resin.

The matrix resin of the surface layer (A), the middle layer (B) and the surface layer (C) need not to be the same. Preferably, the matrix resin can be selected independently for each of the surface layer (A), the middle layer (B) and the surface layer (C).

In other preferred embodiments of the invention, the matrix resin used in the surface layer (A), the middle layer (B) and the surface layer (C) is the same. For example, the same vinyl ester resin is used in the surface layer (A), the middle layer (B) and the surface layer (C).

Generally, the reinforcing fibers are used for improving the mechanical properties of the layer(s) of the sandwich structure precursor and the sandwich structure composite of the invention. The amount of reinforcing fibers in the layers may be the same or different.

The reinforcing fibers are present in the surface layer (A) in an amount of preferably more than 15 wt.% to not more than 65 wt.%, more preferably 20 wt.% to 60 wt.%, and most preferably 25 wt.% to 57 wt.%, based on the total weight of the surface layer (A).

The reinforcing fibers are present in the surface layer (C) in an amount of preferably more than 15 wt.% to not more than 65 wt.%, more preferably 20 wt.% to 60 wt.%, and most preferably 25 wt.% to 57 wt.%, based on the total weight of the surface layer (C).

In preferred embodiments, the amount of reinforcing fibers in the surface layer (A) is the same as in the surface layer (C). In other preferred embodiments, the amount of reinforcing fibers in the surface layer (A) is different from the amount of reinforcing fibers in the surface layer (C).

Also, the middle layer (B) may comprise reinforcing fibers. The middle layer (B) comprises reinforcing fibers in an amount preferably of 0 wt.% to 15 wt.%, more preferably of 5 wt.% to 13 wt.%, and most preferably of 7 wt.% to 11 wt.%, based on the total weight of middle layer (B).

The reinforcing fibers of surface layer (A) and/or the reinforcing fibers of surface layer (C) and/or the reinforcing fibers of middle layer (B) preferably comprise carbon fibers, glass fibers, aramid fibers or combinations thereof. More preferably, the reinforcing fibers of surface layer (A) and the reinforcing fibers of surface layer (C) comprise, or consist of, carbon fibers and the reinforcing fibers of middle layer (B) comprise, or consist of, glass fibers.

Preferably, the carbon fibers comprise polyacrylonitrile (PAN) based carbon fibers, pitch-based carbon fibers, rayon-based carbon fibers and vapor grown carbon fibers. Among them, polyacrylonitrile (PAN) based carbon fibers are preferably used due to their excellent mechanical strength.

Preferably, the reinforcing fibers comprises, more preferably consist of, multidirectional fibers, unidirectional continuous fibers, short fibers or combinations thereof. More preferably, the reinforcing fibers comprises unidirectional continuous fibers, short fibers or combinations thereof.

Short fibers are fibers in a discontinuous (short fiber) state. Short fibers have an average length of 3 mm to 30 mm, preferably 20 mm to 30 mm, more preferably 23 mm to 27 mm. A typical average length for short fibers is 25 mm. Short fibers having such an average length can, for example, be obtained by cutting continuous fibers into the desired length. The measurement of the average length of fibers can preferably be done by scanning electron microscope (SEM), optical microscope or X-ray CT measurement as described in Nevin Gamze Karsli, Ayse Aytac and Veli Deniz; Journal of Reinforced Plastics and Composites 31(15) 1053-1060.

As stated above, the density of the middle layer (B) is not only lower than the density of the surface layer (A), but at the same time also lower than the density of the surface layer (C). The density of a layer can inter alia be controlled by the type of matrix resin and the amount of reinforcing fibers used for the layer. Also, additives such as inorganic fillers and/or pigments can influence the density of the layer, if present.

The surface layer (A) has a density of preferably 1.0 to 2.0 $g/cm^3$, more preferably 1.1 to 1.9 $g/cm^3$ and most preferably 1.2 to 1.8 $g/cm^3$ and/or the surface layer (C) has a density of 1.0 to 2.0 $g/cm^3$, more preferably 1.1 to 1.9 $g/cm^3$ and most preferably 1.2 to 1.8 $g/cm^3$.

The density of the middle layer (B) is always lower than the density of both the surface layer (A) and the surface layer (C). The middle layer (B) has a density of preferably 0.1 to 1.0 $g/cm^3$, more preferably 0.2 to 0.9 $g/cm^3$, and most preferably 0.3 to 0.8 $g/cm^3$.

Preferably, the surface layer (A) and/or the middle layer (B) and/or the surface layer (C) comprises an inorganic filler, more preferably only the middle layer (B) comprises an inorganic filler. The inorganic filler preferably comprises glass bubbles and/or calcium carbonate, more preferably consists of glass bubbles. Glass bubbles have the advantage that they can be incorporated into the matrix resin for density reduction.

Preferably, the surface layer (A) and/or the middle layer (B) and/or the surface layer (C) comprises a pigment, more preferably the surface layer (A) and the surface layer (C) comprise a pigment, most preferably only either the surface layer (A) or the surface layer (C) comprises a pigment. Preferably, the pigment is carbon black.

Each layer of the sandwich structure precursor has a certain average thickness. The average thickness of a layer is the average distance between the two opposing surfaces of a layer as described above.

As shown in Figure 1, the surface layer (A) has an average thickness a, the middle layer (B) an average thickness b, and the surface layer (C) an average thickness c. Preferably, the average thickness b of the middle layer (B) fulfills the following relation (I):

$$0.1 \cdot (a+c) \leq b \leq 10 \cdot (a+c) \qquad (I)$$

In other words, the average thickness b of middle layer (B) is between 0.1 to 10 times the sum of the average thickness a of the surface layer (A) and the average thickness c of the surface layer (C).

More preferably, the average thickness b of the middle layer (B) fulfills the following relation (II):

$$0.2 \cdot (a+c) \leq b \leq 9 \cdot (a+c) \qquad (II)$$

or even more preferably the average thickness (b) of the middle layer (B) fulfills the following relation (III):

$$0.4 \cdot (a+c) \le b \le 7 \cdot (a+c) \qquad \text{(III)}$$

Preferably, the surface layer (A) and the surface layer (C) have the same composition and/or the same average thickness. In other words, the surface layer (A) and the surface layer (C) are identical in terms of their composition and/or their average thickness.

The invention further provides a method for producing a sandwich structure composite, the method comprising

a) providing a sandwich structure precursor according to the invention as described above in all embodiments, and

b) molding the sandwich structure precursor of step a).

The molding in step b) is preferably performed by compression molding. Compression molding is known in the art. Compression molding is done at a pressure preferably of 50 bar to 150 bar, more preferably of 60 bar to 130 bar, and most preferably 70 bar to 110 bar. Compression molding is done at a temperature preferably of 120 °C to 150 °C, more preferably of 135 °C to 145 °C.

The compression molding is done for a specific time period, preferably for a time period of 30 s to 20 min, more preferably for a time period of 1 min to 10 min. The time period applicable mainly depends on the average thickness of the overall sandwich structure precursor to be compression molded. Generally, the thicker the overall sandwich structure precursor is, the longer the time period of compression molding.

Preferably, step a) of the method further comprises attaching connection elements and/or mounting fixtures to the provided sandwich structure precursor. The connections elements are preferably screws, bolts and/or nuts.

In principle, any suitable compression mold apparatus known in the art can be used for the method of the invention.

The invention also provides a sandwich structure composite obtained by the method of the invention as described in all embodiments above.

Preferably, the density of the sandwich structure composite is between 0.5 g/cm$^3$ and 2 g/cm$^3$, more preferably between 0.7 g/cm$^3$ and 1.5 g/cm$^3$, more preferably between 0.9 g/cm$^3$ and 1.3 g/cm$^3$, and most preferably between 1.0 g/cm$^3$ and 1.2 g/cm$^3$.

The sandwich structure composite obtained by the method of the invention as described above can have various shapes, sizes and/or forms. The shape, size and/or form of the obtained sandwich structure composite is determined by the shape, size and form of the mold cavity of the compression molding apparatus used. Thereby, various articles comprising, or consisting of, the sandwich structure composite can be obtained.

Due to the short time periods applied in the compression molding, the method for producing a sandwich structure composite according to the invention is eligible for mass production.

Preferably, the sandwich structure composite has a flat form or a curved form. The flat form is preferably a sheet.

The invention further provides an article comprising, preferably consisting of, the sandwich structure composite according to the invention as described in all embodiments above.

Preferably, the article is a component or part of an automobile or a component or part of an aircraft. The article may also be a component or part of other industrial fields. Other industrial fields are, for example, maritime transport, such as shipping, and construction.

The component or part of an automobile is preferably a component of the structure of an automobile, an interior of an automobile or an exterior of an automobile. Preferably, the component of the exterior is a vehicle roof, a trunk lid, a hood or a door panel. Preferably, the component of the interior is a seat frame component. Preferably, the component of the structure is a floor panel, a spare wheel compartment, a rear wall or battery case.

The component or part of an aircraft is preferably a component of the structure of an aircraft or an interior of an aircraft. Preferably, the component or part of the structure is a part of the fuselage, cowlings, fairings or airfoil surfaces. Preferably, the component or part of the interior is a seat component or a compartment.

BRIEF DESCRIPTION OF THE DRAWING

The sole Figure 1 is a schematic side view of a sandwich structure precursor (1) according to an embodiment of the invention.

EXAMPLES

**1. Measurement Methods**

**a) Density of the layers of the sandwich structure precursor**

The density of the layers of the sandwich structure precursor has been measured by immersion method, liquid pycnometer method, gas displacement pycnometer method, or titration method, according to ISO 1183-1, or ISO 12154).

**b) Density of the layers of the sandwich structure composite**

The density of the layers of the sandwich structure composite having two surface layers (A, C) and a middle layer (B) is measured by either of the following procedures 1) or 2).

1) The two surface layers (A, C) are removed by machining. At this time, it is carefully processed until the glass bubbles contained in the middle layer (B) can be observed at all on the surface of the processed sample. As a result, a sample composed of only the middle layer (B) is obtained. After measuring the average thickness (tB) of the sample by an arbitrary method such as a micrometer, the density (d1) of the sample is measured by the method of ISO 1183-1, or ISO 12154.
Next, after measuring the average thickness (tABC) of the entire sandwich structure composite, the density (d2) of the entire sandwich structure composite is measured by the method of ISO 1183-1 or ISO 12154. Using this, the density (ii) of each of the two surface layers (A, C) is expressed by the following equation.

$$\{(tABC) \times (d2) - (tB) \times (d1)\} / \{(tABC) - (tB)\} \qquad (ii)$$

2) Either one of the two surface layers (A, C) and a middle layer (B) are removed by machining. At this time, it is carefully processed until the glass bubbles contained in the middle layer (B) cannot be observed on the entire surface of the processed sample. As a result, a sample composed of only one of the two surface layers (A, C) is obtained. After measuring the average thickness (tA or tC) of the sample by an arbitrary method such as a micrometer, the density (d3) of the sample is measured by the method of ISO 1183-1 or ISO 12154.

Next, after measuring the average thickness (tABC) of the entire sandwich structure composite, the density (d2) of the entire sandwich structure composite is measured by the method of ISO 1183-1 or ISO 12154. Using this, the density (iii) of the middle layer (B) is expressed by the following equation.

$$\{(tABC) \times (d2) - 2 \times (t) \times (d3)\} / \{(tABC) - 2 \times (t)\} \qquad (iii)$$

**c) Density of the sandwich structure composite**

The density of the sandwich structure composite has been measured by weighing the sandwich structure composite using an electronic balance to obtain the areal weight (mass per unit area) of the sandwich structure composite, and then dividing the areal weight by the average thickness of the entire sandwich structure composite.

**d) Average thickness**

The average thickness of the sandwich structure composite (tABC) and of the layer(s) (tA, tB, tC) was determined by micrometer as an average of at least three measurements on different locations of the sample. Instead of using a micrometer, in principle any suitable method for determining a thickness can be used.

**e) Surface weight**

The surface weight of a layer is calculated by dividing the density of the layer by its thickness.
The surface weight is expressed in kg/m$^2$.

**f) Stiffness**

The stiffness of the sandwich structure composite has been measured according to ISO 178.
The stiffness is expressed in MPa.

**2. Examples**

Inventive Example 1

A sandwich structure precursor as shown in Figure 1 below was prepared with two surface layers (A, C) and a middle layer (B) arranged between the two surface layers (A, C). For each surface layer (A) and (C) a vinyl ester resin and reinforcing fibers was used. The reinforcing fibers were present in an amount of 50 wt.% based on the total weight of the surface layer (A) or surface layer (C), respectively. The reinforced fibers are polyacrylonitrile (PAN) based carbon fibers (T700SC-F0E-12000) commercially available from Toray Carbon Fibers Europe. Surface layer (A) and surface layer (C) are thus identical, each having a surface weight of 2.5 kg/m$^2$.
For the middle layer (B) the same vinyl ester resin as for layers (A) and (C) was used comprising glass bubbles and glass fibers as reinforcing fibers. The glass bubbles were present in an amount of 1.5 wt.% based on the total weight of layer (B), and the glass fibers were present in an amount of 10 wt.% based on the total weight of layer (B). The glass fibers are commercially available from Nippon Electric Glass Co., Ltd., and the glass bubbles are commercially available from 3M company (Product Number: K37 45KG). Layer (B) had a density of 0.7 g/cm$^3$ and a surface weight of 2 kg/m$^2$.
The prepared sandwich structure precursor (1) was put into the mold cavity of a compression mold having a cavity size of 300 mm width and 400 mm length. The material charge area rate was 232 mm width and 310 mm length, i.e. 60.2%. The compression mold apparatus used was made from SC55.
The compression molding was performed at a mold temperature of 145 °C and a pressure of 100 bar. The time of compression molding was 5 min.
The thus obtained sandwich structure composite had a weight of 505 g, an average thickness of 3.78 mm, a density of 1.11 g/cm$^3$ and a stiffness of 161 MPa (16.433 kgf/mm$^2$)

Comparative Example 1

A sandwich structure precursor (1) as shown in Figure 1 below was provided with two surface layers (A, C) and a middle layer (B) arranged between the two surface layers (A, C). Layers (A) and (C) of Comparative Example 1 were the same layers as in Inventive Example 1. However, also the middle layer (B) of Comparative Example 1 was made of the same composition as layer (A) and layer (C) of Inventive example 1. Hence, all three layers (A), (B) and (C) of Comparative example 1 are identical in terms of composition.
The prepared sandwich structure precursor (1) was put into the mold cavity of a compression mold having a cavity size of 300 mm width and 400 mm length. The material charge area rate was 56.3%, i.e. 225 mm width and 300 mm length. The compression molding was performed under the same conditions as Inventive example 1.
The thus obtained sandwich structure composite had a weight of 508 g, an average thickness of 2.93 mm, a density of 1.40 g/cm$^3$ and a stiffness of 82.2 MPa (8,380 kgf/mm$^2$).
Inventive example 1 has the same weight as comparative example 1, however the stiffness of Inventive example 1 is almost the double of the stiffness of Comparative example 1.

**Claims**

1. Sandwich structure precursor (1) comprising two surface layers (A, C) and a middle layer (B) arranged between the two surface layers (A, C), wherein
   the surface layer (A) comprises a matrix resin and reinforcing fibers,
   the middle layer (B) comprises a matrix resin,
   the surface layer (C) comprises a matrix resin and reinforcing fibers,
   wherein the density of the middle layer (B) is lower than the density of the surface layer (A) and the density of the middle layer (B) is lower than the density of the surface layer (C).

2. The sandwich structure precursor (1) according to claim 1, wherein the matrix resin of the surface layer (A) and/or the matrix resin of the middle layer (B) and/or the matrix resin of the surface layer (C) comprises an epoxy resin, a vinyl ester resin or an unsaturated polyester resin.

3. The sandwich structure precursor (1) according to any one of the preceding claims, wherein the reinforcing fibers are present in the surface layer (A) in an amount of more than 15 wt.% and not more than 65 wt.% based on the total weight of surface layer (A) and/or wherein the reinforcing fibers are present in the surface layer (C) in an amount of more than 15 wt.% and not more than 65 wt.% based on the total weight of surface layer (C),

4. The sandwich structure precursor (1) according to any one of the preceding claims, wherein the surface layer (A) has a density of 1.0 to 2.0 g/cm$^3$ and/or wherein the surface layer (C) has a density of 1.0 to 2.0 g/cm$^3$.

5. The sandwich structure precursor (1) according to any one of the preceding claims, wherein the middle layer (B) has a density of 0.1 to 1.0 g/cm$^3$.

6. The sandwich structure precursor (1) according to any one of the preceding claims, wherein the reinforcing fibers of surface layer (A) and/or the reinforcing fibers of surface layer (C) comprise carbon fibers, glass fibers, aramid fibers or combinations thereof.

7. The sandwich structure precursor (1) according to any one of the preceding claims, wherein the surface layer (A) and/or the middle layer (B) and/or the surface layer (C) comprises a filler.

8. The sandwich structure precursor (1) according to claim 7, wherein the filler comprises glass bubbles and/or calcium carbonate.

9. The sandwich structure precursor (1) according to any one of the preceding claims, wherein the surface layer (A) has an average thickness a, the middle layer (B) an average thickness b, and the surface layer (C) an average thickness c, the average thickness b of the middle layer (B) fulfills the following relation (I):

$$0.1 \cdot (a+c) \le b \le 10 \cdot (a+c) \qquad (I)$$

10. Method for producing a sandwich structure composite, the method comprising

   a) providing a sandwich structure precursor (1) according to any one of the preceding claims,
   b) molding the sandwich structure precursor (1) of step a).

11. Method according to claim 10, wherein the molding in step b) is performed by compression molding.

12. Method according to claim 11, wherein the compression molding is done at a pressure of 50 bar to 150 bar and at a temperature of 120 °C to 150 °C.

13. Sandwich structure composite obtained by the method according to any one of claims 10 to 12.

14. Sandwich structure composite according to claim 13, wherein the density of the sandwich structure composite is between 0.5 g/cm$^3$ and 2 g/cm$^3$.

15. Article comprising the sandwich structure composite according to any one of claims 13 to 14.

**Figure 1**

Europäisches
Patentamt

European
Patent Office

Office européen
des brevets

# EUROPEAN SEARCH REPORT

Application Number

EP 19 20 7063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2000 302062 A (MITSUBISHI RAYON CO) 31 October 2000 (2000-10-31) * figure 1; example 1 * ----- | 1-6,10, 11,13-15 | INV. B32B27/08 B32B27/20 B32B27/30 |
| X | US 2019/276616 A1 (KIA HAMID G [US] ET AL) 12 September 2019 (2019-09-12) * paragraph [0007] * * paragraph [0013] * * paragraph [0018] * * paragraph [0023] * * claims 1,3,4,5,11,15,21; figure 1 * ----- | 1-15 | B32B27/36 B32B27/38 B29C43/20 B29C70/10 |

TECHNICAL FIELDS
SEARCHED     (IPC)

B32B
B29C

The present search report has been drawn up for all claims

| Place of search | Date of completion of the search | Examiner |
|---|---|---|
| The Hague | 7 May 2020 | Matthijssen, J-J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 20 7063

This annex lists the patent family members relating to the patent documents cited in  the above-mentioned European search report.
The members are as contained in the European Patent Office EDP file on
The European Patent Office is in no way liable for these particulars which are merely given for the purpose of information.

07-05-2020

| Patent document cited in search report | | Publication date | Patent family member(s) | | Publication date |
|---|---|---|---|---|---|
| JP 2000302062 | A | 31-10-2000 | NONE | | |
| US 2019276616 | A1 | 12-09-2019 | CN | 110239175 A | 17-09-2019 |
| | | | DE | 102019105574 A1 | 12-09-2019 |
| | | | US | 2019276616 A1 | 12-09-2019 |
| | | | US | 2019276617 A1 | 12-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000302062 B
- WO 2016088871 A
- JP 2016124102 B

**Non-patent literature cited in the description**

- **NEVIN GAMZE KARSLI ; AYSE AYTAC ; VELI DENIZ.** *Journal of Reinforced Plastics and Composites,* vol. 31 (15), 1053-1060